# EUROPEAN PATENT SPECIFICATION

(11) **EP 3 661 738 B1**
(45) Date of publication and mention of the grant of the patent: **04.05.2022**
(21) Application number: 18759749.7
(22) Date of filing: 01.08.2018
(51) Int. Cl.: B32B 5/02, B32B 7/12, B32B 27/12, B32B 27/18, B32B 27/36

(54) **METHOD FOR PRODUCING A COMPOSITE MATERIAL WITH BIODEGRADABILITY PROPERTIES FOR MAKING CLOTHING ITEMS AND COMPOSITE MATERIAL OBTAINED BY SAID METHOD**
VERFAHREN ZUR HERSTELLUNG EINES VERBUNDSTOFFES MIT BIOLOGISCHER ABBAUBARKEIT ZUR HERSTELLUNG VON KLEIDUNGSSTÜCKEN UND NACH DIESEM VERFAHREN HERGESTELLTER VERBUNDSTOFF
PROCÉDÉ DE PRODUCTION D'UN MATÉRIAU COMPOSITE AYANT DES PROPRIÉTÉS DE BIODÉGRADABILITÉ POUR LA FABRICATION D'ARTICLES DE VÊTEMENT ET MATÉRIAU COMPOSITE OBTENU PAR LEDIT PROCÉDÉ

(30) Priority: 01.08.2017 IT 201700088779
(43) Date of publication of application: 10.06.2020
(73) Proprietor: Successori Reda - S.p.A. Societa' Benefit, 13835 Valdilana (BI) (IT)
(72) Inventor: BOTTO POALA, Ercole, 13825 Vallemosso (BI) (IT)
(74) Representative: Robba, Pierpaolo
(86) International application number: PCT/IB2018/055783
(87) International publication number: WO 2019/026002

(56) References cited:
- DE-A1-102015 008 588
- FR-A1- 2 678 172
- US-A- 762 492

## Description

### Technical Field

The invention relates to a method for producing a composite material with biodegradability properties for making clothing items. The invention further relates to the composite material obtained by said method. More generally, the invention relates to the field of materials intended for making clothing items and, more particularly, though not exclusively, those clothing items that are intended to cover the human body while being exposed to weather, such as, for instance, sports garments, jackets, coats, wind-jackets and the like. The invention finds application, for example, in the field of the so-called technical clothing, i.e. the particular kind of clothing devised with technological materials and innovative solutions in order to face specific situations, such as bad weather conditions, or to employed for outdoor sports.

### Prior Art

According to the prior art, the making of clothing items can be effected starting from materials obtained by coupling several layers, each having specific functional and aesthetical characteristics. The coupling step usually consists in joining a functional layer or membrane to a fabric made of natural fibers, with the aim of enhancing the technical features of the fabric, enriching it with functions such as impermeability and comfort. The coupling step further has the purpose of obtaining a material suitable for being used for the making of clothing items with opposite faces that are aesthetically different from each other.

For the coupling step, a cylinder printing system is conventionally used. The cylinder, which is stippled embossed, prints a bonding resin onto a first fabric layer and this layer is immediately adhered to a second layer such as an impermeable membrane. The coupled product thus obtained is then squeezed between two cylinders and dried. Point-bonding has the purpose of maintaining a soft hand of the end material, i.e. softness, smoothness and voluminosity evaluated as touch feel.

The main functional characteristics of the functional membrane are impermeability and breathability. Impermeability is measured by means of an increasing or constant hydrostatic pressure expressed in mm of water column. Breathability is evaluated by measuring the amount of vapor that the membrane can carry, or with the value of the resistance that the membrane opposes to the passage of vapor.

Some examples of functional membranes are given by hydrophilic polyurethane membranes, microporous polyurethane membranes, colored polyurethane membranes, polyester membranes, polyamide membranes, one-component and two-component PTFE membranes. These known functional membranes, although possessing technical characteristics of strong resistance and durability, are not easily biodegradable at the end of their useful service life.

The know membranes that are generally used as functional layer in the coupling process therefore make the obtained end product not easily biodegradable. Said known membranes, indeed, have melting temperatures that are usually high, typically higher than 160°C and comprised between 160°C and 180°C.

The use of biodegradable polymers is known in particular in the packaging sector, for the production of plastic films intended for the packaging of products of various kinds. These biodegradable polymeric films generally have a thickness of a few tens of microns, typically 20 - 30 µm.

Recently there has been a need to have biodegradable clothing items, i.e. clothing items susceptible to decompose in a natural way, thanks to the action of bacteria or other microorganisms. This need is in particular due to the increased awareness on the part of human beings, of the need to safeguard natural resources, avoiding as much as possible every cause of pollution with their habits and lifestyles. DE 10 2015 008 588 A1 discloses a method for producing a textile composite material comprising the step of coupling a layer of textile material based on natural fibres to a biodegradable decorative layer comprising cork via a sheet of biodegradable thermoplastic polymer material,.

The markets are therefore increasingly looking for environmentally friendly and easily biodegradable products.

The main object of the invention is therefore to provide a method for producing a composite material having biodegradability properties and suitable to be used for making clothing items.

Another object of the invention is to provide a method of the aforesaid type, which can be carried out at low costs and is therefore suitable for production in large quantities on an industrial scale.

These and other objects are achieved by the method and the composite material as claimed in the appended claims.

### Disclosure of the Invention

According to the invention, the method for producing a composite material with biodegradability properties for making clothing items comprises the main steps of:
- providing a first, preferably biodegradable layer of natural material, for instance made of wool fabric;
- subjecting said first layer to a waterproofing treatment applied at a temperature comprised between 150 and 170°C, for instance a water-repellent treatment, by applying a fluorinate or non-fluorinated polymer;
- providing a second layer of biodegradable polymer material, for instance a sheet or membrane made of PLA;
- coupling the first layer, after it has been subjected to the water-repellent treatment, to the second layer, thus obtaining a coupled composite material.

The making of a clothing item with the composite material thus obtained is preferably carried out by means of the following sequence of steps:
- effecting cutting of the coupled composite material for obtaining the parts of a clothing item to be made;
- joining the parts of the clothing item together, preferably by means of sewing or gluing or welding;
- subjecting the clothing item to finishing in order to make it suitable for sale.

The biodegradability properties of the clothing items made with the composite material according to the invention will of course depend also on the biodegradability properties of the other components of the end garment, such as, for instance, of seams, buttons, inserts, finishes and treatments of various kinds, commonly used in the production of clothing items. In principle, a clothing item made exclusively with the composite material of the invention will have improved biodegradability properties compared to those found in known clothing items and substantially equivalent to those of the aforesaid composite material. In the present disclosure, by "biodegradable" it is meant that the composite material of which the clothing item is made comprises a functional sheet or membrane which is susceptible to natural decomposition, for example in municipal and industrial composting plants. Preferably, the functional membrane with which said second layer is made meets the biodegradability criteria according to any of the standards ISO 17088, EN 13432, EN 14995 or ASTM D6400 or D6868. Even more preferably, the functional membrane meets the biodegradability criteria set by the regulation EN 13432 (09-2000). In addition, according to the invention, the functional membrane has a melting temperature preferably lower than 120°C and, even more preferably, comprised between 100°C and 120°C. A higher melting temperature would lead to an increasing reduction in the biodegradability properties of the material of which the membrane is made. By "melting temperature of the functional membrane" it is meant the temperature at which the material of which the membrane is made irreversibly loses its structural characteristics due to the effect of an even partial passage of state. According to the invention, said two layers can be coupled by means of an adhesive or other known means, such as welding or seaming, and remain preferably unaltered at the end of the coupling step, i.e. the physical structure and chemical composition of the two layers remain preferably unchanged after the coupling step.

Depending on the embodiments, the composite material according to the invention has more or less marked biodegradability properties, as will be clearer from the following description, depending on the properties of the first layer of natural material applied to the functional membrane which constitutes the second layer and on the adhesive used for coupling said first layer to the membrane.

According to the invention, the first layer of natural material is preferably biodegradable and comprises a fabric based on textile fibers of plant or animal origin. Preferably, according to the invention, said first layer is a wool-based fabric, i.e. a fabric consisting for the most part of wool threads.

More generally, the textile fibers can be of plant origin, belonging to the group comprising cotton, flax, hemp, jute, ramie, sisal, coconut, broom, hibiscus, Manila hemp, straw, bamboo or a combination thereof, or of animal origin, belonging to the group comprising wool, hair, silk, horsehair, marine silk or a combination thereof.

As is known, fabrics intended for making clothing items require a particular application called WR or water-repellent treatment, in order to make them waterproof. According to the prior art, the WR treatment is applied after the coupling of the functional membrane to the fabric, in order not to jeopardize the application of the membrane itself. The WR treatment, indeed, renders ineffective, or may significantly jeopardize, the hot-bonding step of the functional membrane to the fabric layer. The application temperature of the polymer used for the WR treatment, however, is about 150-170°C and, in the case of a biodegradable membrane, for example made of PLA, it would cause permanent damage to the membrane.

Advantageously, according to the invention, the WR treatment is therefore carried out on the first layer of natural fabric, before applying the membrane onto said first layer.

The WR ("water-repellent") waterproofing treatment is a surface treatment that has the task of making the surface of the first layer waterproof. The treatment performances are evaluated through a test established by the UNI EN ISO 20811 standard with a method called spray test. The test sample is placed at 45° and is hit by a known quantity of water in the form of rain coming from a funnel. The sample is observed visually and compared to sample wetting images with levels ranging from totally wet, value 1, to totally dry, value 5.

The water-repellent treatment is based on the use of chemical products able to create a physical or chemical film on the material so as to modify the surface tension between water and fabric.

These products may be of the following nature:
- they may be fluorine-based, also called fluorinated polymers; such chemical products contain within them fluorine end groups, which chemically repel water;
- they may be non-fluorinated polymers; they are silicone-based or polyurethane-based polymers, or mixtures of hydrophobic waxes which, by coating the fabric and the fiber forming the same generate a barrier to the passage of water.

The application of these compounds can take place in different ways; the one commonly used consists of three steps carried out in a machine called foulard, placed at the entrance of a second machine called dryer or rameuse.

The first step, called impregnation step, determines the full bath application of the water-solubilized polymer. In a second step, the squeezing of the fabric is carried out by means of two coupled rolls which, by means of a preset pressure, determine the quantity of product applied. In a third step, drying and subsequent polymerization of the product is carried out by means of hot air and by evaporation of water.

The drying temperature of the product is very important, since each polymer has a well-defined polymerization temperature. Staying below this temperature jeopardizes the adhesion of the polymer to the substrate.

The chemical products used to obtain the WR treatment must be dried at temperatures ranging from 130°C to 160°C; lower temperatures determine a lower resistance of said products to washing due to an incomplete polymerization.

Hence the impossibility of effecting direct application on the fabric coupled with the biodegradable membrane, due to the too high temperatures, as mentioned above.

Said water-repellent treatment is capable of attributing water-proofing properties to said first layer and is obtained by applying a fluorinated or non-fluorinated polymer, preferably applied at a polymerization temperature comprised between 150 and 170°C.

The impermeability obtained with this treatment can advantageously be between 1000 and 15000 mm of water column. Preferably, the treatment is capable of conferring an impermeability between 5000 and 10000 mm of water column.

The polymers used for these treatments are usually of two categories. A first category includes fluorine-based polymers which are currently C6 polymers with short chains and fluorine-based end groups. These polymers, by cross-linking, increase the surface tension of the fabric, thus repelling water. A second category includes non-fluorinated polymers, of more recent construction, and fluorine-free. These are products based on silicone or polyurethane compounds mixed with waxes. During cross-linking they create a film that covers the fabric and prevents the passage of water.

The WR treatment can be obtained by impregnating the first layer by passing it in tanks containing the solubilized polymeric product. Subsequently, the material constituting the first layer is squeezed by means of two or three rubber cylinders which have the function of eliminating the excess polymeric product. The quantity of polymeric product which is impregnated in the material of the first layer at the end of the squeezing step is determined by the squeezing pressure of the cylinders. In a station following squeezing and generally arranged in line with the previous processing stages, the material of the first layer is subjected to drying. Drying can take place by bringing the material of the first layer to the desired height and subjecting it to jets of hot air with temperatures comprised between 150°C and 170°C depending on the curing temperature of the polymer product used to confer water-repellency. The concentrations of the applied product vary depending on the water-repellent product used and on the type of material to be treated. Preferably, amounts ranging from 20 g/l to 100 g/l are used.

During hot-bonding of the conventional membrane to the fabric layer, temperatures ranging from 120°C to 140°C are used, but these temperatures are not applicable to a biodegradable membrane since they generate destruction or solubilization thereof. It is therefore necessary to effect bonding of the layer constituted by the biodegradable membrane at a temperature suitable to fix the product permanently and not to damage the membrane. Advantageously, according to the invention, the step of coupling the first layer, after being subjected to the water-repellent treatment, to the second layer, thus obtaining a coupled composite material, is carried out by hot-bonding at a temperature not higher than 90°C and preferably of about 80°C.

According to the invention, said second layer is preferably obtained starting from a bioplastic. According to the European Bioplastics Association, the term bioplastic includes all the families of plastic materials originating from biomass or bio-based, i.e. the material is totally or partially derived from biomass (plants), for example corn, sugar cane or cellulose.

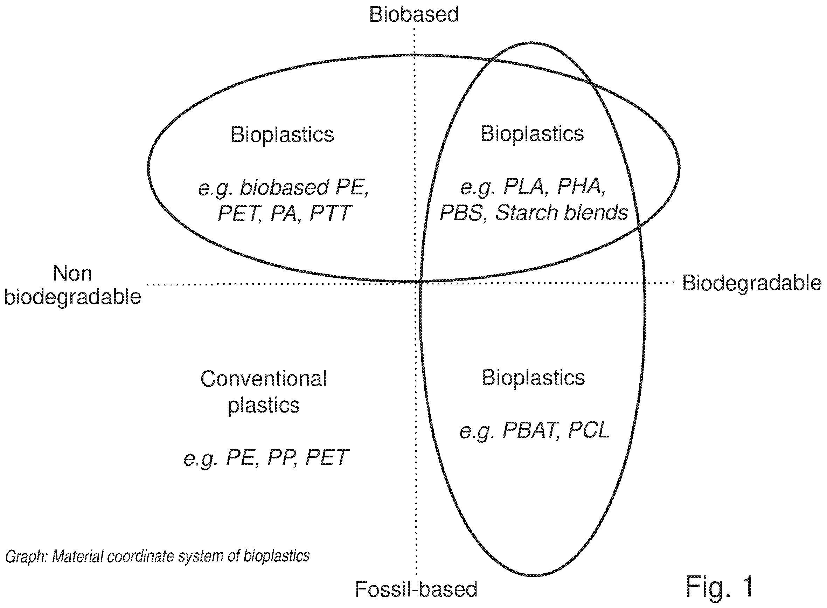

Fig.1 shows a chart of the classification according to the European Bioplastics Association. It is a two-axis model in which all types of plastic and their combinations are classified. According to this classification four types of plastic are identified, distinguished on the horizontal axis into: biodegradable plastics and non-biodegradable plastics and, on the vertical axis, into plastics derived from renewable sources or from petrochemical materials. The four groups of plastics thus identified are:
1. Non-biodegradable plastics of petrochemical origin, among which are the conventional plastics (for example PE, PP, PET).
2. Biodegradable plastics of natural origin, i.e. plastics originated from biomass and having biodegradability properties (for example PLA, PHA, starch derivatives).
3. Biodegradable plastics of petrochemical origin, i.e. plastics that are biodegradable, but are produced starting from fossil sources (for example PBAT, PBS, PCL).
4. Non-biodegradable plastics derived from renewable sources, i.e. plastics produced starting from biomass, but do not have biodegradability properties (for example bio-PE, bio-based PET).

According to the invention, the plastics belonging to the groups 2. and 3. are advantageously suitable for the making of the second layer.

Concerning group 2., the main biodegradable polymers produced from renewable sources (including those produced by chemical synthesis of monomers from renewable sources and those produced from modified microorganisms or bacteria) are: polylactic acid (PLA), thermoplastic starch (TPS), starch mixed with aliphatic polyesters and copolyesters, starch esters, starch mixed with natural materials, polyesters of microbiological origin - polyhydroxyalkanoates (PHA) including butyric, valeric and hexanolic acid copolymers (PHBV, PHBH), cellulose esters, regenerated cellulose, wood and other natural materials.

Concerning group 3., examples of biodegradable polymers derived from fossil sources are the following: synthetic aliphatic polyesters - polycaprolactone (PCL), polybutylene succinate (PBS), synthetic aliphatic and aromatic copolymers - polyethylene terephthalate / succinate (PETS), polyvinyl alcohol (PVOH), polybutyrate-adipate-terephthalate (PBAT), a fully biodegradable random copolyester used in packaging production.

Still according to the invention, said second layer will also be obtainable starting from mixtures of biodegradable polymers belonging to said group 2. or 3., which therefore derive partially from renewable sources and partially from fossil sources.

According to the invention, said second layer preferably has a structural and water-repellent function and preferably comprises a polylactic acid (PLA) based membrane preferably comprising a mixture of copolyester polymers and additives.

Advantageously, according to the invention, the composite material obtained has characteristics of impermeability, lightness, thermal regulation capacity, i.e. the main parameters to be taken into consideration in the manufacture of a clothing item, comparable to those obtainable with a conventional material produced according to the prior art and having no biodegradability properties.

### Brief Description of the Figures

The aforesaid and other advantageous features of the present invention will be apparent from the following description of some preferred embodiments of the invention given by way of non-limiting example with reference to the appended drawings in which:
- Fig. 1 is a chart of the classification of plastic materials according to the European Bioplastics Association;
- Fig. 2 shows a container in which a test of the biodegradability of the material has been carried out;
- Figs. 3A, 4A and 5A are photos of a sample of material according to the invention subjected to a biodegradability test;
- Figs. 3B, 4B e 5B are photos of a sample of conventional material subjected to a biodegradability test.

### Description of Some Preferred Embodiments of the Invention

### Example

In an embodiment of the method according to the invention, coupling of a layer of polymer material PLA to a first layer of natural material consisting of wool-based material has been provided for. Both layers are preferably biodegradable, the first layer consisting of natural fabric and the second one consisting of a biodegradable polymer. Still according to the invention, the first layer of natural material is preferably biodegradable and is subjected to a treatment capable of conferring water-repellent characteristics, WR ("water-repellent") treatment, before the second layer is applied.

The first layer of wool-based material has been subjected to a water-repellent treatment capable of making said first layer waterproof and has been applied at a polymerization temperature of 160°C. In this embodiment, the WR treatment has been obtained with a non-fluorinated polymer.

In this embodiment, the material chosen for the first layer was a 100% washable wool flannel with 3-thread twill weave obtained with the following macro-processings:
- Easy-care treatment of the fiber in order to obtain the washability characteristics;
- Preparation and spinning in order to obtain the spun yarn used in interweaving between warp and weft;
- Warping in order to create the warp support;
- Weaving in order to create the fabric by interweaving the weft on the warp;
- Preparation for finishing;
- Fulling;
- Cropping;
- Stabilization cycle;
- Checking of the finished product.

The step of coupling the first layer, after it has been subjected to the water-repellent treatment, to the second layer, thus obtaining a coupled composite material, was effected by hot-bonding at a temperature of 80°C.

Said second layer comprised a functional membrane made of polylactic acid PLA comprising a mixture of copolyester polymers ad additives complying with the standard EN 13432 (09-2000).

The membrane had a thickness of 14 µm and a density of 1.47 g/cm³, with the following mechanical properties measured according to the standard ASTM D882:

| | | | | |
|---|---|---|---|---|
| Ultimate tensile strength | MD | ≥ 15 | N/mm² | ASTM D882 |
| | TD | ≥13 | | |
| Yield strength | MD | ≥7 | N/mm² | |
| | TD | ≥6 | | |
| Elastic modulus | MD | ≥240 | N/mm² | |
| | TD | ≥180 | | |
| Elongation at break | MD | ≥170 | % | |
| | TD | ≥270 | | |

where MD represents the Machine Direction and TD the Thickness Direction.

The material thus obtained was cut in order to obtain the parts of a clothing item to be made, notably a sports jacket. The parts were then joined together by sewing. Subsequently, the clothing item was subjected to finishing, and possibly to ironing and folding in order to make it suitable for sale.

With reference to the appended figures, the result of a test performed on a sample of functional membrane for the second layer obtained according to the example described above is described here below.

The aim of the test was to assess the biodegradability properties of the aforesaid sample and compare them with those obtainable from a sample of conventional material made of a typically non-biodegradable polyurethane polymer. In particular, the performed test basically represents a simulation of what happens to the membrane when it is put in contact with earth, water and microorganisms contained in the ground at two different temperatures.

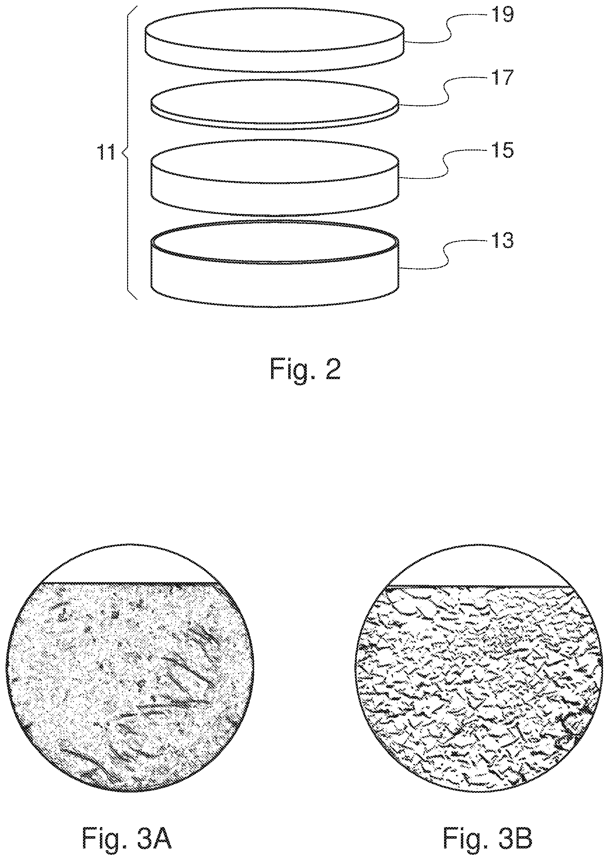

Fig.2 shows a container 11 in which the test was carried out and in which the numeral 13 denotes a Petri dish, the numeral 15 denotes a layer of a moistened soil layer, the numeral 17 denotes a sample of product to be tested, and the numeral 19 denotes a lid. The container 11 had a cylindrical shape and the samples 17 of material to be tested had a disc-like shape.

The test was performed in the following ways. Two Petri dishes 13 having a diameter of 9 cm and a thickness of 1.5 cm were provided. The dishes 13 had holes in their lower part in order to allow oxygenation of the soil 15 and introduction of water for keeping the soil moistened. The two containers 11 were filled with soil 15 and the sample to be tested, consisting, in a first instance, of a disc 17 of a biodegradable membrane according to the invention (container 11_{A}) and, in a second instance, of a disc 17 of a membrane conventionally used in clothing items and having no biodegradability properties (container 11_{B}), was placed onto said soil. The transparent upper lid 19 was placed onto both containers 11_{A} and 11_{B} and both containers were sealed laterally with adhesive tape in order to prevent accidental opening of the sample. Both containers were placed upside down, i.e. with the respective Petri dish 13 and the corresponding holes upward, for alternating time periods (every other day) in an oven at 58°C and outside at an ambient temperature of 26°C in order to change the operating conditions. The high temperature in the oven was intended to simulate the composting phases, as for example occurs in the test according to the standard EN 13432, and the ambient temperature was intended to simulate the degradation under normal environmental conditions. At predetermined times, photographic scans of the samples were carried out to assess degradation thereof.

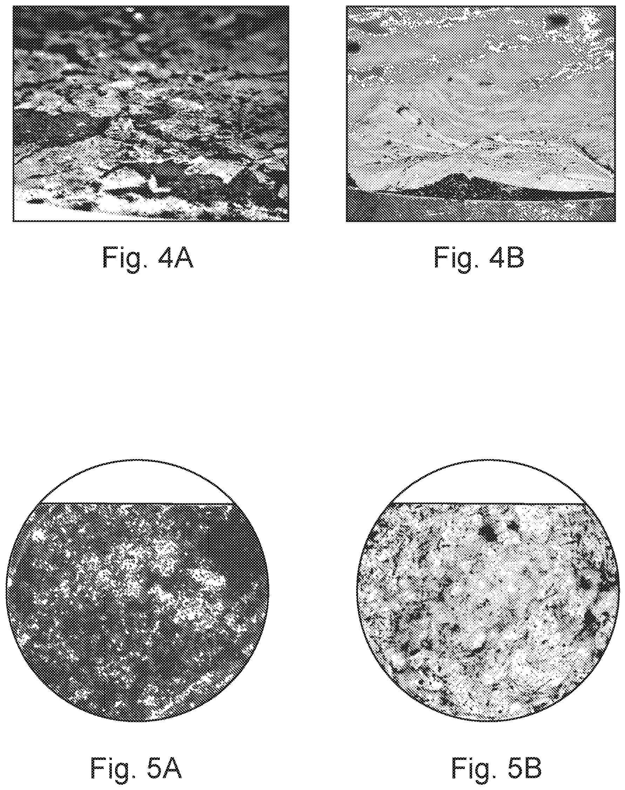

The test lasted about twenty months during which the samples were kept at a temperature between about 26°C and about 58°C every other day. Figs. 3A and 3B show the photos of the samples of a biodegradable membrane according to the invention and of a conventional membrane, respectively, at the beginning of the test. Figs. 4A and 4B show the photos of the samples of a biodegradable membrane according to the invention and of a conventional membrane, respectively, in an intermediate phase of the test and Figs. 5A and 5B show the photos of the samples of a biodegradable membrane according to the invention and of a conventional membrane, respectively, at the end of the test. After twenty months the conventional membrane has not undergone any degradation and the sample of material is compact. On the contrary, over time the biodegradable membrane sample initially underwent an opacification, with subsequent fragmentation into small pieces (Fig. 4A) and became, after twenty months, an almost indistinguishable part of the soil (Fig. 5A).

## Claims

1. Method for producing a composite material with biodegradability properties for making clothing items, comprising the steps of:
- providing a first layer of natural material;
- subjecting said first layer to a water-repellent treatment;
- providing a second layer of biodegradable polymer material;
- coupling the first layer, after it has been subjected to the water-repellent treatment, to the second layer, thus obtaining a coupled composite material, wherein said water-repellent treatment is applied at a temperature comprised between 150 and 170°C.

2. Method according to claim 1, wherein said second layer comprises a functional sheet or membrane, and wherein said coupling step is carried out at a temperature lower than the melting temperature of said two layers.

3. Method according to claim 1 or 2, wherein the first layer of material comprises a fabric based on textile fibers of plant or animal origin and wherein said textile fibers of plant origin belong to the group comprising cotton, flax, hemp, jute, ramie, sisal, coconut, broom, hibiscus, Manila hemp, straw, bamboo or a combination thereof and wherein said textile fibers of animal origin belong to the group comprising wool, hair, silk, horsehair, marine silk or a combination thereof.

4. Method according to any of the preceding claims, wherein the second layer comprises a functional membrane with a melting temperature lower than 120°C.

5. Method according to claim 4, wherein said melting temperature is comprised between 100°C and 120°C.

6. Method according to any of the preceding claims, wherein said water-repellent treatment is obtained by application of a fluorinated or non-fluorinated polymer.

7. Method according to any of the preceding claims, wherein said step of coupling the first layer, after it has been subjected to the water-repellent treatment, to the second layer, thus obtaining a coupled composite material, is effected by hot-bonding at a temperature not higher than 80°C.

8. Method according to any of the preceding claims, wherein said second layer comprises a membrane made of polylactic acid PLA comprising a mixture of copolyester polymers and additives.

9. Method according to claim 7 or 8, wherein said second layer comprises a polymer film having a thickness comprised between 10 and 14 µm and a density comprised between 1.0 and 2.0 g/cm³, with the following mechanic properties measured in accordance with the standard ASTM D882:
| | | | | |
|---|---|---|---|---|
| Ultimate tensile strength | MD | ≥ 15 | N/mm² | ASTM D882 |
| | TD | ≥13 | | |
| Yield strength | MD | ≥7 | N/mm² | |
| | TD | ≥6 | | |
| Elastic modulus | MD | ≥240 | N/mm² | |
| | TD | ≥180 | | |
| Elongation at break | MD | ≥170 | % | |
| | TD | ≥270 | | |

10. Method according to any of the preceding claims, wherein said second layer comprises a functional membrane meeting the criteria of biodegradability according to any of the following standards: ISO 17088, EN 13432, EN 14995 or ASTM D6400 or D6868.

11. Method according to any of the preceding claims, wherein said second layer comprises a functional membrane meeting the criteria of biodegradability according to the standard EN 13432 (09-2000).

12. Method according to any of the preceding claims, wherein said second layer is made of biodegradable plastic material of natural origin and wherein said biodegradable plastic material is made from biomass and belongs to the group comprising PLA, PHA, starch derivatives.

13. Method according to any of the claims 1 to 12, wherein said second layer is made of biodegradable plastic material of petrochemical origin and wherein said biodegradable plastic material originates from fossil sources and belongs to the group comprising PBAT, PBS, PCL.

14. Composite material with biodegradability properties for making clothing items, obtained by the method as claimed in any of the claims 1 to 13.

15. Clothing item made from the composite material according to claim 14, wherein there are provided the steps of:
- effecting cutting of the coupled composite material for obtaining the parts of a clothing item to be made;
- joining the parts of the clothing item together by means of sewing;
- subjecting the clothing item to finishing in order to make it suitable for sale.

## Patentansprüche

1. Verfahren zur Herstellung eines Verbundstoffes mit biologischer Abbaubarkeit zur Herstellung von Kleidungsstücken mit den Schritten:
- Bereitstellen einer ersten Lage aus Naturmaterial,
- Unterziehen der ersten Lage einer wasserabweisenden Behandlung,
- Bereitstellen einer zweiten Lage aus biologisch abbaubarem Polymermaterial,
- Verbinden der ersten Lage, nachdem sie der wasserabweisenden Behandlung unterzogen wurde, mit der zweiten Lage, wodurch ein gekoppeltes Verbundmaterial erhalten wird, wobei die wasserabweisende Behandlung bei einer Temperatur zwischen 150 und 170°C durchgeführt wird.

2. Verfahren nach Anspruch 1, wobei die zweite Lage ein funktionales Blatt oder eine Membran enthält und wobei der Verbindungschritt bei einer Temperatur durchgeführt wird, die kleiner als die Schmelztemperatur der beiden Schichten ist.

3. Verfahren nach Anspruch 1 oder 2, wobei die erste Lage Material einen Stoff enthält, der auf Textilfasern pflanzlichen oder tierischen Ursprungs beruht und wobei die Textilfasern pflanzlichen Ursprungs zu einer Gruppe gehören, die Baumwolle, Flachs, Hanf, Jute, Ramie, Sisal, Kokos, Ginster, Hibiskus, Manilahanf, Stroh, Bambus oder eine Kombination daraus enthält, und wobei die Textilfasern tierischen Ursprungs zu einer Gruppe gehören, die Wolle, Haar, Seide, Pferdehaar, Meeresseide oder eine Kombination davon enthält.

4. Verfahren nach einem der vorstehenden Ansprüche, wobei die zweite Lage eine funktionale Membran mit einer Schmelztemperatur unterhalb von 120°C enthält.

5. Verfahren nach Anspruch 4, wobei die Schmelztemperatur zwischen 100°C und 120°C liegt.

6. Verfahren nach einem der vorstehenden Ansprüche, wobei die wasserabweisende Behandlung durch Einsatz eines fluorierten oder nicht fluorierten Polymers erreicht wird.

7. Verfahren nach einem der vorstehenden Ansprüche, wobei der Schritt des Verbindens der ersten Lage, nachdem sie der wasserabweisende Behandlung unterzogen wurde, mit der zweiten Lage, wodurch ein gekoppeltes Verbundmaterial erzeugt wird, durch Heißkleben bei einer Temperatur von nicht mehr als 80°C erreicht wird.

8. Verfahren nach einem der vorstehenden Ansprüche, wobei die zweite Schicht eine Membran enthält die aus Polymilchsäure PLA hergestellt ist und eine Mischung von Copolyester-Polymeren und Additiven enthält.

9. Verfahren nach Anspruch 7 oder 8, wobei die zweite Lage eine Polymerfolie enthält, die eine Dicke zwischen10 und 14 µm und eine Dichte zwischen 1,0 und 2,0 g/cm³ hat und die folgenden, gemäß dem Standard ASTM D882 gemessenen mechanischen Eigenschaften aufweist:
| | | | | |
|---|---|---|---|---|
| Zugfestigkeit | MD | ≥ 15 | N/mm² | ASTM D882 |
| | TD | ≥ 13 | | |
| Streckgrenze | MD | ≥ 7 | N/mm² | |
| | TD | ≥ 6 | | |
| Elastizitätsmodul | MD | ≥ 240 | N/mm² | |
| | TD | ≥ 180 | | |
| Bruchdehnung | MD | ≥ 170 | % | |
| | TD | ≥ 2701 | | |

10. Verfahren nach einem der vorstehenden Ansprüche, wobei die zweite Lage eine funktionale Membran enthält, welche die Kriterien biologischer Abbaubarkeit nach einem der folgenden Standards erfüllt: ISO 17088, EN 13432, EN 14995 oder ASTM D6400 oder D6868.

11. Verfahren nach einem der vorstehenden Ansprüche, wobei die zweite Lage eine funktionale Membran enthält, welche die Kriterien biologische Abbaubarkeit gemäß dem Standard EN 13432 (09-2000) erfüllt.

12. Verfahren nach einem der vorstehenden Ansprüche, wobei die zweite Lage aus biologisch abbaubarem Plastikmaterial natürlichen Ursprungs hergestellt ist und wobei das biologisch abbaubare Plastikmaterial aus Biomasse hergestellt ist und zu einer Gruppe gehört, die PLA, PHA und Stärkederivate enthält.

13. Verfahren einem der Ansprüche 1 bis 12, wobei die zweiten Lage aus biologisch abbaubaren Plastikmaterial petrochemischen Ursprungs hergestellt ist und das biologisch abbaubare Plastikmaterial aus fossilen Quellen stammt und zu einer Gruppe gehört, die PBAT, PBS und PCL enthält.

14. Verbundstoff mit biologischer Abbaubarkeit zur Herstellung von Kleidungsstücken, das nach einem Verfahren, wie in einem der Ansprüche 1 bis 13 beansprucht, erzeugt wurde.

15. Kleidungstück hergestellt aus eine Verbundstoff nach Anspruch 14, wobei die Schritte durchgeführt wurden:
- Zuschneiden des gekoppelten Verbundstoffs, um Teile eines herzustellenden Kleidungsstücks zu erhalten,
- Verbinden der Teile des Kleidungsstücks mittels Nähen,
- Unterziehen des Kleidungsstücks einer Endverarbeitung, um es verkaufsfertig zu machen.

## Revendications

1. Procédé de production d'une matière composite dotée de propriétés de biodégradabilité pour réaliser des vêtements, comprenant les étapes de :
- fourniture d'une première couche de matière naturelle ;
- soumission de ladite première couche à un traitement d'hydrofugation ;
- fourniture d'une seconde couche de matière polymère biodégradable ;
- couplage de la première couche, après sa soumission au traitement d'hydrofugation, à la seconde couche, obtenant ainsi une matière composite couplée,
dans lequel ledit traitement d'hydrofugation est appliqué à une température comprise entre 150 et 170 °C.

2. Procédé selon la revendication 1, dans lequel ladite seconde couche comprend une feuille ou membrane fonctionnelle, et dans lequel ladite étape de couplage est réalisée à une température inférieure à la température de fusion desdites deux couches.

3. Procédé selon la revendication 1 ou 2, dans lequel la première couche de matière comprend un tissu à base de fibres textiles d'origine végétale ou animale et dans lequel lesdites fibres textiles d'origine végétale appartiennent au groupe comprenant coton, lin, chanvre, jute, ramie, sisal, noix de coco, genêt, hibiscus, chanvre de Manille, paille, bambou ou une combinaison de ceux-ci et dans lequel lesdites fibres textiles d'origine animale appartiennent au groupe comprenant laine, poil, soie, crin, soie marine ou une combinaison de ceux-ci.

4. Procédé selon l'une quelconque des revendications précédentes, dans lequel la seconde couche comprend une membrane fonctionnelle avec une température de fusion inférieure à 120 °C.

5. Procédé selon la revendication 4, dans lequel ladite température de fusion est comprise entre 100 °C et 120 °C.

6. Procédé selon l'une quelconque des revendications précédentes, dans lequel ledit traitement d'hydrofugation est obtenu par application d'un polymère fluoré ou non fluoré.

7. Procédé selon l'une quelconque des revendications précédentes, dans lequel ladite étape de couplage de la première couche, après sa soumission au traitement d'hydrofugation, à la seconde couche, obtenant ainsi une matière composite couplée, est effectuée par collage à chaud à une température non supérieure à 80 °C.

8. Procédé selon l'une quelconque des revendications précédentes, dans lequel ladite seconde couche comprend une membrane réalisée en polyacide lactique PLA comprenant un mélange de polymères de copolyester et d'additifs.

9. Procédé selon la revendication 7 ou 8, dans lequel ladite seconde couche comprend un film polymère ayant une épaisseur comprise entre 10 et 14 µm et une densité comprise entre 1,0 et 2,0 g/cm³, avec les propriétés mécaniques suivantes mesurées conformément à la norme ASTM D882 :
| | | | | |
|---|---|---|---|---|
| Résistance à la traction | MD | ≥ 15 | N/mm2 | ASTM D882 |
| | TD | ≥ 13 | | |
| Limite d'élasticité | MD | ≥ 7 | N/mm2 | |
| | TD | ≥ 6 | | |
| Module d'élasticité | MD | ≥ 240 | N/mm2 | |
| | TD | ≥ 180 | | |
| Allongement à la rupture | MD | ≥ 170 | % | |
| | TD | ≥ 270 | | |

10. Procédé selon l'une quelconque des revendications précédentes, dans lequel ladite seconde couche comprend une membrane fonctionnelle répondant aux critères de biodégradabilité selon l'une quelconque des normes suivantes : ISO 17088, EN 13432, EN 14995 ou ASTM D6400 ou D6868.

11. Procédé selon l'une quelconque des revendications précédentes, dans lequel ladite seconde couche comprend une membrane fonctionnelle répondant aux critères de biodégradabilité selon la norme EN 13432 (09-2000).

12. Procédé selon l'une quelconque des revendications précédentes, dans lequel ladite seconde couche est réalisée en matière plastique biodégradable d'origine naturelle et dans lequel ladite matière plastique biodégradable est réalisée à partir de biomasse et appartient au groupe comprenant PLA, PHA, dérivés d'amidon.

13. Procédé selon l'une quelconque des revendications 1 à 12, dans lequel ladite seconde couche est réalisée en matière plastique biodégradable d'origine pétrochimique et dans lequel ladite matière plastique biodégradable provient de sources fossiles et appartient au groupe comprenant PBAT, PBS, PCL.

14. Matière composite dotée de propriétés de biodégradabilité pour réaliser des vêtements, obtenue par le procédé tel que revendiqué à l'une quelconque des revendications 1 à 13.

15. Vêtement réalisé à partir de la matière composite selon la revendication 14, dans lequel sont prévues les étapes de :
- réalisation d'une coupe de la matière composite couplée pour obtenir les parties d'un vêtement à réaliser ;
- assemblage des parties du vêtement ensemble par couture ;
- soumission du vêtement à une finition afin de le rendre approprié pour la vente.
